(19) **Europäisches Patentamt**
**European Patent Office**
**Office européen des brevets**

(11) **EP 3 125 686 B1**

(12) **EUROPEAN PATENT SPECIFICATION**

(45) Date of publication and mention
of the grant of the patent:
**23.08.2023   Bulletin 2023/34**

(51) International Patent Classification (IPC):
*A01K 85/01* *(2006.01)*      *A01K 85/00* *(2006.01)*
*A01K 97/01* *(2006.01)*

(21) Application number: **15715449.3**

(52) Cooperative Patent Classification (CPC):
**A01K 85/015; A01K 85/1833;** A01K 97/01

(22) Date of filing: **20.03.2015**

(86) International application number:
**PCT/IB2015/052045**

(87) International publication number:
**WO 2015/150962 (08.10.2015 Gazette 2015/40)**

(54) **ELECTRONIC ICE JIG WITH FLASHING LIGHT**

ELEKTRONISCHER EISKÖDER MIT BLINKLICHT

LEURRE ÉLECTRONIQUE AYANT UNE LUMIÈRE CLIGNOTANTE POUR LA PÊCHE SUR GLACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **01.04.2014   LT 2014054**

(43) Date of publication of application:
**08.02.2017   Bulletin 2017/06**

(73) Proprietor: **Kaunas University of Technology
44249 Kaunas (LT)**

(72) Inventors:
• **SVILAINIS, Linas
LT-49206 Kaunas (LT)**

• **DUMBRAVA, Vytautas
LT-49406 Kaunas (LT)**
• **CHAZIACHMETOVAS, Andrius
LT-53451 Kacergine (LT)**

(74) Representative: **Klimaitiene, Otilija
AAA Law
P.O.Box 33
A. Gostauto street 40B
03163 Vilnius (LT)**

(56) References cited:
**US-A- 5 157 857        US-A- 5 915 941
US-A1- 2004 144 015    US-A1- 2006 185 217
US-A1- 2010 251 595    US-A1- 2013 067 791**

## Description

## Field of the invention

The present invention relates to fishing equipment, in particular fishing baits being equipped with flashing light source.

## Background art

Many carnivorous fish are curious, therefore any stimuli is suitable to attract them. Light, electromagnetic, vibrant, acoustic or electric stimuli are used in baits. Invention is a particular type of jig for ice fishing. Ice jig differs from lures for casting handlining or longlining. In ice fishing the angler is moving only the wrist causing the ice jig to move up and down. Ice jig size has to be small due to the specifics of fishing. Light emitting diodes (LED) can be integrated into an ice jig as a very small light source.

Most of known prior art baits with light-emitting diodes are designed for casting therefore their size exceeds 20mm. LED forward voltage varies from 1,8V to 4,2V (depending on the structure of the junction). More than one battery is required to drive LEDs if the forward voltage of the LED is higher than a single battery voltage (1.5V for non-chargeable, 1,2V for chargeable) thus are not suitable for use with small jigs. Furthermore, conventional batteries contain chemicals that are harmful to the environment. If jig is ceased, it will remain in the water until finally decompose and release harmful substances into the environment. Another problem is the lifetime of the battery. Once overmolded, battery cannot be replaced. Lithium batteries have higher capacity and voltage, but poses safety problems and are expensive.

A patent No. US 5,157,857 A discloses a fishing apparatus including electronic circuitry for providing blinking LEDs and audio noises wherein charging capacitors and miniature batteries power the apparatus.

Patent No. US 8,091,270 B2 discloses a fishing lure with a LED. The LED is activated by inserting or removing a battery through special cover in the lure. Main drawbacks of the disclosed fishing lure are a static light source (LED is always on), removable air-tight battery cover, and light activation by manually inserting the battery.

Patent application No. US2013/0067791 discloses a fishing lure comprising LEDs. Flashes of light generated by LED are used to attract fish. Special sensor circuit is used to save energy. It measures resistance between external contacts of the sensor circuit and triggers LED pulse generator circuit if the resistance decreases, i.e. when sensor contacts get wet. Thereby LED uses very small current because it lights up only for a short period of time. In this way energy consumption is significantly reduced. The device consists of a rechargeable battery, a controller with light-emitting diodes and an immersion sensor. The immersion sensor measures resistance between the external contacts and triggers generation of light flashes when it is immersed into water. The same electrodes are used to detect immersion into water and to recharge the internal battery.

The main drawback the aforementioned patent - the LED current is regulated by a resistor, so the supply voltage must be at least slightly higher than the LED forward voltage. Since the patent uses 3.7V lithium polymer battery, LEDs with forward voltage greater than 3.7V (e.g. InGaN) cannot be used. This type of batteries is significantly larger than the desired size of the ice jig. Moreover, use of the power source is not economical: if lower voltage LEDs (e.g. AlGaInP) would be used, majority of the energy would be absorbed by the current regulating resistor. Also the charging time would be very long and the ice jig could be used again only the next day.

The aim of the invention is to minimize the size of the ice jig, significantly reduce the energy losses, prolong the service life and provide an ice jig suitable for control of any color LED.

## Short description of the invention

The present invention is directed to an electronic flashing ice jig comprising the features of independent claim 1.

The electronic flashing ice jig, comprises contacts in the form of an eye and a hook, which contacts are used to control the electrical circuit comprising the selection unit of control signals, main controller, light emitting diodes and their control circuits, power source rechargeable via said two contacts, being over molded into waterproof plastic case, wherein the power source is an electrochemical capacitor and the special switching mode power converter converts power supply voltage into LED driving current.

Electrochemical capacitor (also known as electric double layer capacitor or supercapacitor) has higher energy density and capacitance compared to conventional capacitors. Most important, the electrochemical capacitor can be charged significantly faster than conventional batteries. For comparison, the classical 6mAh rechargeable battery should be charged for a minimum of 2.5 hours. Meanwhile 0,2F capacitance electrochemical capacitor will be fully charged in a few minutes. Such capacitance would provide the ice jig with up to 4 hours of operation. Miniature electrochemical capacitors can be as small as 6,8mm in diameter and 2,1mm thick e.g. DCK-3R3E224U-E offered by Elna, thus allowing to reduce the size of the ice jig significantly. In addition, number of charge-discharge cycles of electrochemical capacitors is significantly higher compared to conventional chemical batteries. Electrochemical capacitors comprise carbon and organic electrolyte therefore no hazardous substances are released into the environment even if jig is lost in water. The lost jig will discharge in a few hours, preventing optical pollution in water.

As voltage of the electrochemical capacitor drops faster compared to batteries, a voltage-current converter is essential. Switching mode power converter uses inductive coil to convert power supply voltage into current. When coil is connected to a power source, energy is transferred into the coil. When the coil is connected to a light emitting diode, the energy in a form of LED drive current is transferred into LED with minimal losses. Since the current is the output parameter, the voltage is automatically adjusted to the LED forward voltage and circuit does not need to be changed for different color LEDs (this can affect the LED forward voltage). This type of LED drive circuit allows maximum consumption of energy stored in the electrochemical capacitor; because current-voltage conversion efficiency can reach almost 100% The energy transmission by coil can be regulated so that the LED current is adjusted to any supply voltage.

## Short description of drawings

Fig.1.  shows the construction of the ice jig according to the invention.

Fig 2  shows the structure of the electronic circuitry of the jig.

Fig 3  shows the potential circuit of the switching mode voltage-to-current converter

Fig 4  shows contacts, used for immersion detection, charging and programming.

Fig 5  shows the operation diagrams when jig is immersed in water.

## Detailed description of the invention

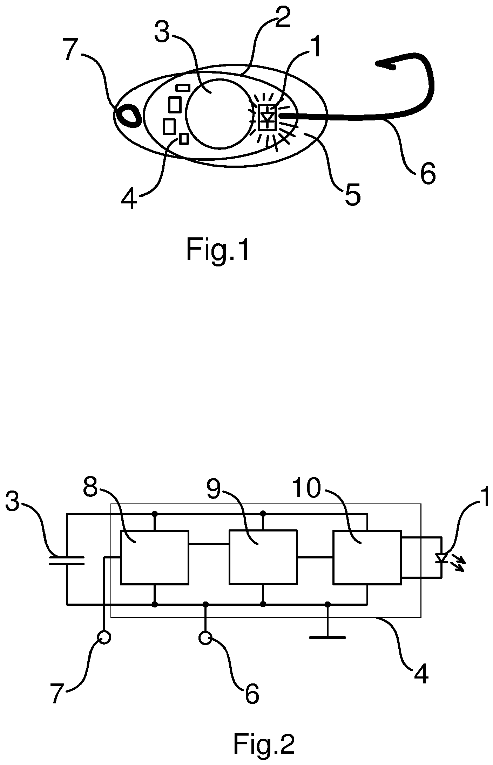

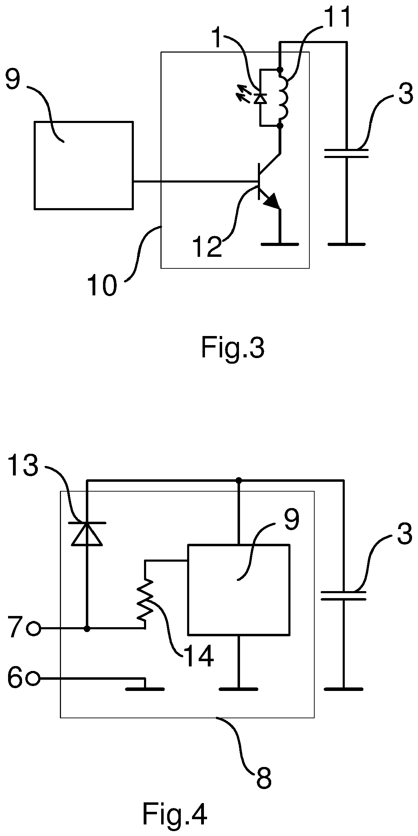

The construction of the ice jig according to the invention is shown in Figure 1. The jig comprises a LED (1), a printed circuit board (2), containing an electrochemical capacitor (3), which is a power supply unit, and an electronic circuit (4) for control of the light-emitting diode (1) operation. The ice jig is enclosed in an over molded special waterproof plastic case (5), forming a volumetric shape of the jig. Jig has a hook (6) and the eye (7) for attaching to a fishing line. The eye (7) and the hook (6) are not only used as mechanical components, but also as electrical contacts. The electronic circuit (4) comprises contacts, where one contact is the hook (6) and the other one is the eye (7), a service circuit (8), a main controller (9) forming the control signals, and the switching mode voltage-to-current converter (10) used to convert voltage of the electrochemical capacitor (3) into current pulses for driving the light-emitting diode (1). The switching mode voltage-to-current converter (10) comprises an inductive coil (11) used to convert power supply voltage into current of the electronic switch (12) which is controlled by the pulse sequences supplied by the main controller (9). An electronic switch (12) can be either bipolar transistor as shown in Fig 3 or field-effect transistor (MOSFET). The hook (6) and the eye (7) are connected via service circuit (8) (Fig 4). The hook (6) is connected to a common potential, the ground. Eye (7) via the resistor (14) is connected to the immersion detection input of the main controller (9). The eye (7) is also used for charging the electrochemical capacitor (3) via the diode (13).

Operation of the ice jig according to the invention is as follows.

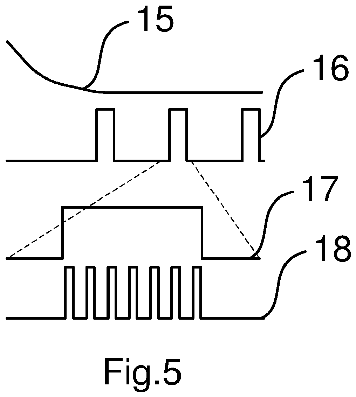

The resistance between the eye (7) and the hook (6) is reduced when the jig is submerged in to water and the voltage level at the immersion detection input goes down as provided in time diagram (15) of in Figure 5. Main controller (9) interprets this as a signal that the jig is immersed in water. Timer of the main controller (9) forms a signal (16), which defines the duration and the repetition period of the flashes (17) of the light emitting diode (1). Repetition period of the flashes (17) is 1-3 seconds. Duration of the flash (17) is about 0.1-0.5 seconds. The main controller (9) forms the pulse sequence (18) at the output as given in time chart in Figure 5 to control the electronic switch (12) of the voltage-to-current converter (10) during each flash (17). This pulse sequence is used to transform the energy from electrochemical capacitor (3) into the coil (11). The positive pulse commands the electronic switch (12) to connect the electrochemical capacitor (3) to the coil (11). The current through the coil (11) begins to grow. Coil current $I$ at the end of the pulse with duration $\tau_i$, in case of power supply voltage $E$ and the coil inductance $L$ is:

$$I = \frac{E}{L}\tau_i$$

When the switch (12) is disconnected, the current begins to flow in circuit comprising the coil (11) and the LED (1). Energy from the coil (11) is transferred to the light-emitting diode (1) in a form of form driving current. The current gradually decreases until next pulse of the sequence. Peak current of the LED can be adjusted by changing the pulse duration or the coil inductance. Pulse period within the sequence can also be used to adjust the brightness of the flashes of the light-emitting diode (1).

Resistance between the eye (7) and the hook (6) is increased when the jig is taken out of the water and the logic level at the immersion detection input goes up. The main controller (9) interprets this as a signal that the jig is removed from the water. The main controller (9) output signal for controlling the voltage-current converter (10) are turned off so the light flashes of the LED (1) are no longed generated.

Any external voltage source having voltage corresponding to the maximum allowable voltage of the electrochemical capacitor is suitable for charging the jig. When the external power source is connected to the contacts (6) and (7) (the contact (6) connects the positive terminal and the contact (7) to the negative terminal of the source), a diode (13) opens and the charge current begins to flow to the electrochemical capacitor (3). Once the electrochemical capacitor is charged, potential on the diode (13) leverages and the diode (13) closes.

Proposed invention has simpler construction compared to the prototype, jig is easier to seal, has smaller size, application of different color light emitting diodes is more flexible, the jig has significantly longer service life, the switching mode voltage-to-current converter achieves higher light emitting diode driving efficiency and adjusts automatically to the LED forward voltage; electrochemical capacitor can be quickly charged. Electrochemical capacitor, unlike other chemical power sources, is environmentally friendly, because it uses carbon and organic electrolyte, i.e. even after the deterioration no harmful substances are spread into the environment.

## Claims

1. An electronic flashing ice jig consisting of an eye (7) and a hook (6) for attaching to a fishing line and being electrical contacts, an electronic circuit (4) comprising a control signal selection unit in the form of a diode (13) and a main controller (9), at least one LED (1) connected to the electronic circuit (4), an electrochemical capacitor power source (3) rechargeable using the eye (7) and the hook (6) contacts, wherein the ice jig is enclosed in an over molded waterproof plastic case forming a volumetric shape of the ice jig, wherein the eye (7) and the hook (6) contacts are used for control of the electronic circuit (4), and wherein the diode (13) is arranged to open when external power source is connected to the contacts of the hook (6) and the eye (7) for the charge current to flow to the electrochemical capacitor (3), the diode (13) being further arranged to close when the electrochemical capacitor (3) is charged and the potential on the diode (13) leverages, wherein the electrochemical capacitor (3) is used together with a switching mode voltage-to-current converter (10) for automatic adjustment of the supply voltage to the at least one LED (1) forward voltage.

## Patentansprüche

1. Elektronisch blinkender Eis-Jig-Köder, bestehend aus einer Öse (7) und einem Haken (6), die elektrische Kontakte sind, zur Befestigung an einer Angelschnur, einer elektronischen Schaltung (4), die eine Steuersignalauswahleinheit in Form einer Diode (13) und ein Hauptsteuergerät (9) umfasst, mindestens einer LED (1), die an der elektronischen Schaltung (4) angeschlossen ist, einer elektrochemischen Kondensatorstromquelle (3), die über die Öse (7) und die Kontakte des Hakens (6) aufgeladen werden kann, wobei

der Eis-Jig-Köder in einem umspritzten wasserdichten Kunststoffgehäuse eingeschlossen ist, das eine volumetrische Form des Eis-Jig-Köders bildet, wobei die Kontakte der Öse (7) und des Hakens (6) zur Steuerung der elektronischen Schaltung (4) verwendet werden, und wobei die Diode (13) so angeordnet ist, dass sie sich öffnet, wenn eine externe Stromquelle an die Kontakte des Hakens (6) und der Öse (7) angeschlossen wird, damit der Ladestrom zu dem elektrochemischen Kondensator (3) fließt, wobei die Diode (13) ferner so angeordnet ist, dass sie sich schließt, wenn der elektrochemische Kondensator (3) aufgeladen wird und das Potenzial an der Diode (13) ansteigt, wobei der elektrochemische Kondensator (3) zusammen mit einem Schaltmodus-Spannungs-/Strom-Wandler (10) zur automatischen Anpassung der Versorgungsspannung an die Durchlassspannung der mindestens einen LED (1) verwendet wird.

## Revendications

1. - Leurre clignotant électronique pour pêche sur glace constitué d'un œil (7) et d'un crochet (6) pour fixation à une ligne de pêche et étant des contacts électriques, d'un circuit électronique (4) comprenant une unité de sélection de signal de commande sous la forme d'une diode (13) et d'un dispositif de commande principal (9), d'au moins une DEL (1) connectée au circuit électronique (4), d'une source d'alimentation à condensateur électrochimique (3) rechargeable à l'aide des contacts de l'oeil (7) et du crochet (6), le leurre pour pêche sur glace étant enfermé dans un boîtier en plastique étanche surmoulé formant une forme volumétrique du leurre pour pêche sur glace, dans lequel les contacts de l'œil (7) et du crochet (6) sont utilisés pour la commande du circuit électronique (4), et dans lequel la diode (13) est agencée pour s'ouvrir lorsqu'une source d'alimentation externe est connectée aux contacts du crochet (6) et de l'œil (7) pour permettre au courant de charge de circuler vers le condensateur électrochimique (3), la diode (13) étant agencée en outre pour se fermer lorsque le condensateur électrochimique (3) est chargé et que le potentiel sur la diode (13) augmente, dans lequel le condensateur électrochimique (3) est utilisé conjointement avec un convertisseur tension-courant à découpage (10) pour un ajustement automatique de la tension d'alimentation à la tension directe de l'au moins une DEL (1).

Fig.1

Fig.2

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5157857 A
- US 8091270 B2

- US 20130067791 A